# EUROPÄISCHE PATENTSCHRIFT

(11) **EP 0 619 443 B1**
(45) Veröffentlichungstag und Bekanntmachung des Hinweises auf die Patenterteilung: **26.10.1994**
(21) Anmeldenummer: 93106337.4
(22) Anmeldetag: 20.04.1993
(51) Int. Cl.: F16G 11/02

(54) **Anschlussstück an einem Drahtseilende**
Wire cable end connector
Pièce de jonction à l'extrémité d'un câble métallique

(43) Veröffentlichungstag der Anmeldung: 12.10.1994
(73) Patentinhaber: Brugg Drahtseil AG, CH-5242 Birr (CH)
(72) Erfinder: Schoepke, Daniel, CH-5200 Windisch (CH); Schweizer, Urs, CH-5524 Niederwil (CH)
(74) Vertreter: Steudtner, Werner, Dipl.-Ing.

(56) Entgegenhaltungen:
- FR-A- 1 197 581
- FR-A- 1 260 807
- FR-A- 2 193 446
- GB-A- 627 834
- GB-A- 798 499
- GB-A- 1 258 919

## Beschreibung

Die Erfindung bezieht sich auf ein am Ende eines Drahtseils angebrachtes Anschlußstück zur Verbindung des Drahtseilendes mit Mitteln zur Aufnahme von durch Längsspannungen im Drahtseil verursachten Zugkräften.

Anschlußstücke dieser Art sind allgemein bekannt (siehe z.B. GB-A-798499 und FR-A-1197581) und seit Jahrzehnten ähnlich wie Schrauben und Muttern in normierten Größen auf dem Markt erhältlich. Die Normierung bezieht sich dabei auf den Durchmesser des Drahtseiles, für das ein solches bekanntes Anschlußstück vorgesehen ist. In der Regel haben diese bekannten Anschlußstücke im wesentlichen die Form eines zylindischen Stiftes, der in seinem einen Endbereich mit einem Gewinde und in seinen anderen Endbereich mit einer zur Stiftachse koaxialen zylindrischen Ausnehmung vom Durchmesser des Drahtseiles versehen ist, für das das betreffende Anschlußstück vorgesehen ist. Zur Anbringung des Anschlußstückes an dem Drahtseil wird das Drahtseilende in diese Ausnehmung eingeführt und der im wesentlichen hülsenförmige Endbereich des stiftförmigen Anschlußstückes mit dem darin befindlichen Drahtseilende dann üblicherweise in die Form eines regelmäßigen Sechskantes gebracht und dadurch das Drahtseilende in dem hülsenförmigen Endbereich des Anschlußstückes festgeklemmt. Damit dabei durch Haftreibung zwischen den Außenflächen des Drahtseilendes und der Innenwand des hülsenförmigen Endbereiches des Anschlußstückes die für die Auslastung des Drahtseils erforderliche Zugkraft von dem Anschlußstück auf das Drahtseil übertragen werden kann, muß die Haftreibungsfläche und damit die Länge des hülsenförmigen Endbereiches bzw. des darin befindlichen Drahtseilendes relativ groß gemacht werden, damit das Risiko eines Herausrutschens des Drahtseilendes aus dem hülsenförmigen Endbereich des Anschlußstückes unter Zuglast mit Sicherheit ausgeschlossen werden kann, da die bei der Verformung des hülsenförmigen Endbereichs von seiner (bei Einführung des Drahtseilendes noch) zylindrischen Hülsenform in die besagte Sechskantform auf das Drahtseilende ausgeübten Klemmkräfte oder genauer Klemmdrücke beschränkt sind und daher wegen des beschränkten Klemmdruckes eine relativ große Haftreibungsfläche erforderlich ist.

Diese bekannten Anschlußstücke haben sich seit langer Zeit bewährt und sind im allgemeinen den gestellten Anforderungen gerecht geworden, wenngleich eine geringere Länge ihrer hülsenförmigen Endbereiche durchaus wünschenswert gewesen wäre. Für bestimmte Anwendungen, insbesondere bei Anwendungsfällen, bei denen das mit dem Anschußstück versehene Drahtseil durch Durchführungen hindurchgezogen werden muß (wie beispielsweise bei einem von einer Vielzahl von parallellaufenden gespannten Drahtseilen gebildeten Zaun, bei dem jedes Drahtseil durch je eine Durchführung in jedem von einer Reihe von "Zaunpfählen" hindurchzuziehen ist), haben diese bekannten Anschlußstücke aber den Nachteil, daß der Durchmesser des stiftförmigen Anschlußstückes um mindestens ca. 20% größer als der Durchmesser des Drahtseiles sein muß, damit die Zuglast des Drahtseils ohne Ueberschreitung der Bruchlast in dem hülsenförmigen Endbereich auf das stiftförmige Anschlußstück übertragen werden kann, denn damit muß auch der Durchmesser der Durchführungen mindestens ca. 20% größer als der Durchmesser des Drahtseils sein, um auch das Anschlußstück durch die Durchführungen hindurchführen zu können. Damit ergibt sich aber der Nachteil, daß das Drahtseil in den Durchführungen keinen Halt findet sondern sich quer zur Drahtseilachse hin und her bewegen kann, was letztlich bei dem oben erwähnten Beispiel eines Drahtseilzaunes im Extremfall (nämlich wenn die Drahtseile die Durchführungen nicht berühren würden) die Funktionslosigkeit der mit den Durchführungen versehenen "Zaunpfähle" zur Folge hätte. Nachteilig ist ferner im Falle, dass die Durchführungen gebohrt werden müssen, auch der sich mit dem größeren Durchmesser der Durchführungen ergebende höhere technische Aufwand für die Herstellung der Durchführungen, und nicht zuletzt sind große Durchführungen für dünne Drahtseile auch aus ästhetischen Gründen unansehnlich.

Der Erfindung lag daher die Aufgabe zugrunde, ein am Ende eines Drahtseiles angebrachtes Anschlußstück der eingangs genannten Art zu schaffen, das keine Durchführungen von wesentlich größerem Durchmesser als dem des Drahtseiles erforderlich macht und mit dem daher die Nachteile von zu großen Durchführungen vermeidbar sind und bei dem ferner auch die bei den bekannten Anschlußstücken erforderliche relativ große Länge der hülsenförmigen Endbereiche nicht mehr notwendig ist, wobei die Länge des Anschlüßstückes möglichst gering sein soll.

Diese Aufgabe wird gemäß den kennzeichnenden Merkmalen des Anspruches 1 gelöst.

Die bezüglich der äußeren Abmaße des Anschlußstückes in Richtung quer zur verlängerten Achse des Drahtseilendes verwendete Begriffsbestimmung "im wesentlichen gleich" schließt dabei äußere Abmaße des Anschlußstückes quer zur Drahtseilachse von mehr als 120% des Drahtseildurchmessers von vornherein aus, weil Anschlußstücke mit Durchmessern,die um ca. 20% größerals der Drahtseildurchmesser sind, wie oben erwähnt auch mit den eingangs genannten bekannten Anschlußstücken realisierbar sind. Hingegen werden Anschlußstücke mit nur geringfügig über dem Drahtseildurchmesser liegenden äußeren Abmaßen quer zur Drahtseilachse von dieser Begriffsbestimmung schon deswegen mit erfaßt, weil der Drahtseildurchmesser kein exakt meßbarer Wert ist sondern wegen der stark strukturierten Oberfläche von Drahtseilen je nach der Meßstelle, an der er gemessen wird, Schwankungen unterworfen ist und somit nur innerhalb eines bestimmten Schwankungsbereiches liegt, dessen Mittelwert in der Regel als Nennwert des Drahtseildurchmessers angegeben wird. Als geringfügig werden hier Unterschiede zwischen den besagten äußeren Abmaßen und dem Drahtseildurchmesser von wenigen Zehntel Millimetern angesehen, woraus sich bei kleineren Drahtseildurchmessern Unterschiede bis etwa 17,5% ergeben können.

Hauptvorteil des vorliegenden, am Ende eines Drahtseiles angebrachten Anschlußstückes ist die Ueberwindung der bisher mit den erwähnten zu großen Durchführungen verbundenen Nachteile und darüber hinaus insbesondere auch die wesentliche Verringerung des technischen Aufwandes, die mit dem vorliegenden Anschlußstück sowohl indirekt in Form eines geringeren Arbeitsaufwandes für das Bohren von Durchführungen mit geringerem Durchmesser als auch direkt in Form eines geringeren Materialaufwandes für das Anschlußstück infolge seiner geringeren äußeren Abmaße in Quer- und Längsrichtung erzielbar ist. Die geringeren äußeren Abmaße in Querrichtung gegenüber den entsprechenden Abmaßen bekannter Anschlußstücke ergeben sich dabei daraus,daß die äusseren Abmaße in Querrichtung beim vorliegenden Anschlußstück nicht wie bei den bekannten Anschlußstücken größer sondern nur gleich dem Drahtseildurchmesser sind, und die geringeren äußeren Abmaße des vorliegenden Anschlußstückes in Längsrichtung gegenüber den entsprechenden Abmaßen bekannter Anschlußstücke sind darauf zurückzuführen, daß die oben erwähnte, bei den bekannten Anschlußstücken erforderliche relativ große Länge der hülsenförmigen Endbereiche bei dem vorliegenden Anschußstück nicht mehr notwendig ist, weil beim vorliegenden Anschußstück das Drahtseilende schon vor seiner Einführung in die im Anschlußstück vorgesehene Ausnehmung bis auf eine in die Ausnehmung passende Größe und damit außerordentlich stark zusammengepreßt wird und daher der erwähnte Klemmdruck, den das Drahtseilende auf die Innenflächen der Ausnehmung ausübt, beim vorliegenden Anschlußstück wesentlich größer als bei den bekannten Anschlußstücken ist, so daß die erforderliche Haftreibungsfläche zwischen Drahtseilende und Ausnehmung und damit auch die Länge der Ausnehmung beim vorliegenden Anschlußstück wesentlich kleiner als die genannte relativ große Länge der hülsenförmigen Endbereiche bei den bekannten Anschlußstücken (siehe GB-A- 798499) gemacht werden kann.

Bei einer bevorzugten Ausführungsform des vorliegenden, am Ende eines Drahtseils angebrachten Anschlußstückes hat das Anschlußstück im wesentlichen die Form eines Stiftes, der in seinem dem Drahtseil zugewandten Endbereich mit einer vorzugsweise als Bohrung ausgebildeten Ausnehmung zur Aufnahme des zusammengepreßten Drahtseilendes versehen ist. Vorteilhaft bei dieser bevorzugten Ausführungsform ist die Einstückigkeit des Anschlußstückes und die damit gegebene direkte Verbindung des Drahtseilendes mit den genannten Mitteln zur Aufnahme von durch Längsspannungen im Drahtseil verursachten Zugkräften durch das Anschlußstück. Die Einstückigkeit dieser bevorzugten Ausführungsform bedingt allerdings die Herstellung der Ausnehmung durch spanbildende Formgebung, vorzugsweise durch eine Bohrung. Dieser Aufwand für die Herstellung der Ausnehmung ist vorteilhaft dadurch vermeidbar, daß das Anschlußstück im wesentlichen die Form einer Hülse hat, die in ihrem dem Drahtseil zugewandten Endbereich zur Aufnahme des zusammengepreßten Drahtseilendes und in ihrem von dem Drahtseil abgewandten Endbereich zur Aufnahme eines Zwischengliedes dient, das die Hülse mit den Mitteln zur Aufnahme von durch Längsspannungen im Drahtseil verursachten Zugkräften verbindet. Die damit gegebene vorteilhafte Vermeidung eines Aufwandes für die Herstellung der Ausnehmung ist jedoch nur unter Verzicht auf Einstückigkeit des in diesem Fall aus Hülse und Zwischenglied bestehenden Anschlußstückes erzielbar.

Mit besonderem Vorteil kann das vorliegende, am Ende eines Drahtseiles angebrachte Anschlußstück in seinem dem Drahtseil zugewandten, zur Aufnahme des zusammengepreßten Drahtseilendes dienenden Endbereich zur Erhöhung der Haftreibung zwischen dem Drahtseilende und der dasselbe umschließenden Ausnehmungswand zusammengepreßt sein, vorzugsweise in Form eines im wesentlichen regelmäßigen Sechskantes. Der Vorteil eines solchen Zusammenpressens von Anschlußstück und darin befindlichem Drahtseilende von außen ist eine weitere Erhöhung des besagten Klemmdurckes, die eine entsprechende weitere Verringerung der Länge der Ausnehmung und damit des Anschlußstückes ermöglicht.

Hinsichtlich der Ausbildung des vorliegenden Anschlußstückes in seinem vom Drahtseil abgewandten Endbereich gibt es verschiedene vorteilhafte Möglichkeiten: Das Anschlußstück kann vorteilhaft die Form eines Stiftes haben, der in seinem vom Drahtseil abgewandteil Endbereich mit einem Gewinde versehen ist, wobei die Mittel zur Aufnahme von durch Längsspannungen im Drahtseil verursachten Zugkräften vorzugsweise eine auf dieses Gewinde passende Mutter umfassen. Diese Ausbildungsform des vorliegenden Anschlußstückes in seinem vom Drahtseil abgewandten Endbereich entspricht der Ausbildung der eingangs genannten bekannten Anschlußstücke. Eine weitere zweckmäßige Möglichkeit besteht darin, daß das vorliegende Anschlußstück die Form eines Stiftes hat, der in seinem vom Drahtseil abgewandten Endbereich mit mindestens einer Ringnut versehen ist, wobei die Mittel zur Aufnahme von durch Längsspannungen im Drahtseil verursachten Zugkräften vorzugsweise einen in die Ringnut passenden Sprengring umfassen. Diese Ausbildungsform hat den Vorteil, daß ein Sprengring in einer Ringnut wesentlich unauffälliger als eine auf ein Gewinde aufgeschraubte Mutter ist, sie ist jedoch mit nur einer Ringnut überhaupt nicht und mit mehreren Ringnuten nur in groben Stufen verstellbar, während mit einer auf ein Gewinde am Anschlußstück aufgeschraubten Mutter eine stufenlose Verstellbarkeit gegeben ist. Das gleiche gilt sinngemäß auch für die weitere vorteilhafte Möglichkeit, daß das vorliegende Anschlußstück im wesentlichen die Form eines Stiftes oder einer Hülse hat und in seinem vom Drahtseil abgewandten Endbereich mit mindestens einem Querloch versehen ist, wobei die Mittel zur Aufnahme von durch Längsspannungen im Drahtseil verursachten Zugkräften vorzugsweise einen in das Querloch passenden Haltebolzen von größerer Länge als dem Durchmesser des Stiftes bzw. der Hülse umfassen.

Hinsichtlich der Abmaße des vorliegenden Anschlußstückes relativ zum Durchmesser des Drahtseils, an dessen Ende das Anschlußstück angebracht ist, gilt im Prinzip folgendes: Die äußeren Abmaße des Anschlußstückes in Richtung quer zur verlängerten Achse des Drahtseilendes sollten kleiner als das 1,175-fache, vorzugsweise kleiner als das 1,1-fache, des Durchmessers des Drahtseiles sein. Zweckmäßig sollten dabei die äußeren Abmaße des Anschlußstückes in Richtung quer zur verlängerten Achse des Drahtseilendes höchstens 5% größer als der Durchmesser des Drahtseils sein. Des weiteren sollten die inneren Abmaße der zur Aufnahme des zusammengepreßten Drahtseilendes dienenden Ausnehmung in dem Anschlußstück in Richtung quer zur Achse des Drahtseilendes zweckmäßig kleiner als das 0,86-fache, vorzugsweise kleiner als das 0,8-fache, des Durchmessers des Drahtseiles sein.

Anhand der nachstehenden Figuren ist die Erfindung im folgenden an einem Ausführungsbeispiel näher erläutert. Es zeigen
- Fig. 1: ein Ausführungsbeispiel des vorliegenden, am Ende eines Drahtseiles angebrachten Anschlußstückes in Seitenansicht,
- Fig. 2: einen Querschnitt des Ausführungsbeispiels in Fig. 1 in der Schnittebene I - I ,
- Fig. 3: einen Querschnitt des Ausführungsbeispiels in Fig. 1 in der Schnittebene II - II .

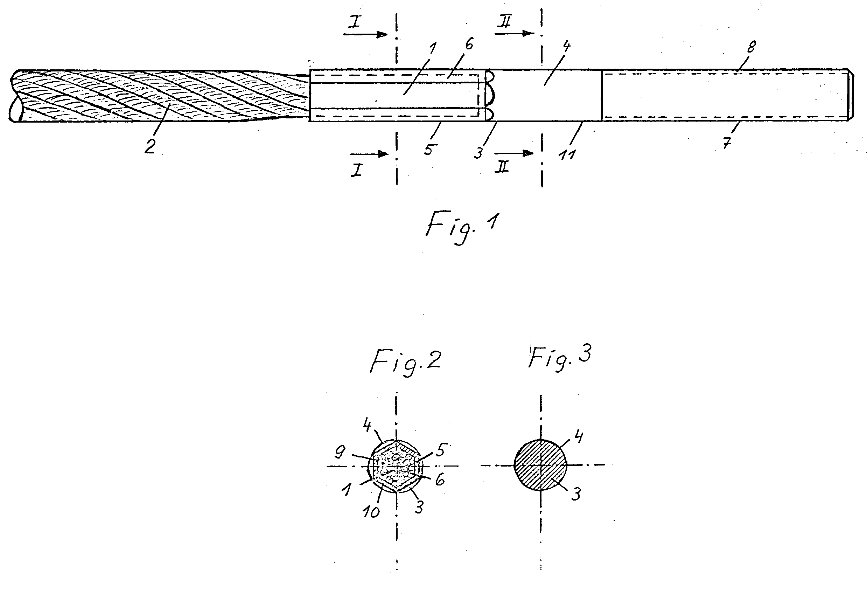

Bei dem in Fig. 1 gezeigten Ausführungsbeispiel ist am Drahtseilende 1 des Drahtseiles 2 das einstückige Anschlußstück 3 angebracht, das im wesentlichen die Form eines Stiftes 4 von gleichem Durchmesser wie dem des Drahtseils 2 hat, der in seinem dem Drahtseil 2 zugewandten Endbereich 5 mit der zur Aufnahme des Drahtseilendes 1 dienenden Ausnehmung 6 und in seinem vom Drahtseil 2 abgewandten Endbereich 7 mit dem Gewinde 8 versehen ist. Die die Ausnehmung 6 begrenzende, das Drahtseilende 1 umschließende Ausnehmungswand 9 hat, wie in Fig. 2 ersichtlich, im in Fig. 1 gezeigten betriebsbereiten Zustand des am Ende des Drahtseils 2 angebrachten Anschlußstückes 3 die Form eines im wesentlichen regelmäßigen Sechskantes 10. Der Stift 4, aus dem das vorliegende einstückige Anschlußstück 3 hergestellt ist, hat im Bereich 11 zwischen seinem mit der Ausnehmung 6 versehenen einen Endbereich 5 und seinem mit dem Gewinde 8 versehenen anderen Endbereich 7 eine zylindrische Form mit, wie Fig. 3 zeigt, vollem Querschnitt.

Die Herstellung und Anbringung des Anschlußstückes 3 am Drahtseilende 1 erfolgt bei dem in Fig. 1 gezeigten Ausführungsbeispiel folgendermaßen: Ein zylindrischer Stift aus Chrom-Nickel-Stahl vom Durchmesser des Drahtseiles 2 und der Länge des Anschlußstückes 3 wird in seinem einen Endbereich 7 mit dem Gewinde 8 und in seinem anderen Endbereich mit einer zur Stiftachse koaxialen zylindrischen Bohrung von einem etwa dem 0,7-fachen des Stiftdurchmessers entsprechenden Bohrungsdurchmesser und einer etwa dem dreifachen des Stiftdurchmessers entsprechenden Bohrungstiefe versehen, bei einem Durchmesser des Drahtseils 2 und damit auch des Stiftes 4 von 6 mm also mit einer Bohrung von 4,25 mm Durchmesser und ca. 20 mm Tiefe. Danach wird das Drahtseil 2 in einem Endbereich von einer etwa dem fünffachen des Stiftdurchmessers entsprechenden Länge derart zusammengepreßt, daß der Durchmesser des zusammengepreßten Drahtseiles am Drahtseilende 1 über eine etwa dem dreifachen des Stiftdurchmessers entsprechende Länge etwa dem 0,7-fachen des Stiftdurchmessers entspricht und dann im restlichen Teil des Endbereiches kontinuierlich auf den vollen Durchmesser des nicht zusammengepreßten Drahtseils 2 übergeht.

Anschließend wird das Drahtseilende 1 im zusammengepreßten Zustand in die besagte zylindrische Bohrung eingeführt und so weit eingeschoben, bis es den Bohrungsgrund erreicht. Danach wird das Anschlußstück 3 in seinem Endbereich 5, innerhalb dessen sich das eingeschobene zusammengepreßte Drahtseilende 1 befindet, zur Erhöhung der Haftreibung zwischen dem Drahtseilende 1 und der dasselbe umschließenden Wand 9 von außen her in die Form eines im wesentlichen regelmäßigen Sechskants 10 gepreßt, womit die Herstellung und Anbringung des Anschlußstückes 3 am Drahtseilende 1 beendet ist.

Bei Festigkeitsprüfungen mit einem Ausführungsbeispiel von 6 mm Durchmesser des Drahtseiles 2 und des Anschlußstückes 3 wurde bei Zugbelastung eine Belastbarkeit von über 60% der Seilbruchlast erreicht und damit annähernd das gleiche Ergebnis wie bei den bekannten Anschlußstücken der eingangs genannten Art erzielt, mit denen jedenfalls dann, wenn ihr Durchmesser nur wenig über 120% des Drahtseildurchmessers liegt, ungefähr 70% der Seilbruchlast erreicht werden. Diese Zugbelastbarkeit läßt sich bei den bekannten Anschlußstücken durch einen gegenüber dem Drahtseildurchmesser wesentlich größeren Durchmesser des Anschlußstückes zwar noch etwas steigern, aber eine Zugbelastbarkeit von über 100% der Seilbruchlast und damit also eine größere Zugfestigkeit der Verbindung zwischen Anschlußstück und Drahtseilende als die Zugfestigkeit des Drahtseiles selbst (Reißen des Drahtseils vor Bruch der Verbindung Anschlußstück - Drahtseilende bei kontinuierlich ansteigender Zugbelastung) ist auch mit den bekannten Anschlußstücken der eingangs genannten Art nicht erreichbar (derartige Zugfestigkeiten lassen sich nur mit Hilfe einer am Ende des Drahtseiles befindlichen Seilschlaufe erreichen). Ebenso wie hinsichtlich der Zugfestigkeit konnte mit dem der Prüfung unterzogenen Ausführungsbeispiel auch eine Wechselfestigkeit gegenüber Biegewechseln von annähernd gleicher Höhe wie bei den bekannten Anschlußstücken der eingangs genannten Art erreicht werden, so daß sich also mit dem vorliegenden, am Ende eines Drahtseiles angebrachten Anschlußstück die eingangs genannten beträchtlichen Vorteile ohne Inkaufnahme wesentlicher Nachteile erreichen lassen und das vorliegende Anschlußstück daher auch über den eingangs erwähnten speziellen Anwendungsbereich hinaus mit großem Vorteil eingesetzt werden kann.

## Patentansprüche

1. Am Ende eines Drahtseiles (2) angebrachtes Anschlußstück (3) zur Verbindung des Drahtseilendes (1) mit Mitteln zur Aufnahme von durch Längsspannungen im Drahtseil (2) verursachten Zugkräften, dadurch gekennzeichnet, daß die äußeren Abmaße des Anschlußstückes (3) in Richtung quer zur verlängerten Achse des Drahtseilendes (1) im wesentlichen gleich oder kleiner als der Durchmesser des Drahtseiles (2) sind und das Drahtseil in seinem Endbereich vor seiner Verbindung mit dem Anschlußstück (3) so weit zusammengepreßt ist, daß das Drahtseilende (1) in eine zur Aufnehme desselben vorgesehene Ausnehmung (6) in dem Anschlußstück (3) von geringerer Oeffnungsweite als dem Durchmesser des Drahtseiles (2) passt, und daß die äußeren Abmaße des Anschlußstückes (3) in Richtung der verlängerten Achse des Drahtseilendes (1) größer als die Länge des in die Ausnehmung (6) eingeführten zusammengepreßten Drahtseilendes (1) sind.

2. Anschlußstück nach Anspruch 1, dadurch gekennzeichnet, daß es im wesentlichen die Form eines Stiftes (4) hat, der in seinem dem Drahtseil (2) zugewandten Endbereich (5) mit einer vorzugsweise durch Bohren gebildeten Ausnehmung (6) zur Aufnahme des zusammengepreßten Drahtseilendes (1) versehen ist.

3. Anschlußstück nach Anspruch 1, dadurch gekennzeichnet, daß es im wesentlichen die Form einer Hülse hat, die in ihrem dem Drahtseil zugewandten Endbereich zur Aufnahme des zusammengepreßten Drahtseilendes und in ihrem von dem Drahtseil abgewandten Endbereich zur Aufnahme eines Zwischengliedes dient, das die Hülse mit den Mitteln zur Aufnahme von durch Längsspannungen im Drahtseil verursachten Zugkräften verbindet.

4. Anschlußstück nach einem der Ansprüche 1 bis 3, dadurch gekennzeichnet, daß es in seinem dem Drahtseil (2) zugewandten, zur Aufnahme des zusammengepreßten Drahtseilendes (1) dienenden Endbereich (5) zur Erhöhung der Haftreibung zwischen dem Drahtseilende (1) und der dasselbe umschließenden Ausnehmungswand (9) zusammengepreßt ist, vorzugsweise in Form eines im wesentlichen regelmäßigen Sechskantes (10).

5. Anschlußstück nach Anspruch 1 oder 2, dadurch gekennzeichnet, daß es im wesentlichen die Form eines Stiftes (4) hat, der in seinem vom Drahtseil abgewandten Endbereich (7) mit einem Gewinde (8) versehen ist, und daß die Mittel zur Aufnahme von durch Längsspannungen im Drahtseil verursachten Zugkräften vorzugsweise eine auf dieses Gewinde passende Mutter umfassen.

6. Anschlußstück nach Anspruch 1 oder 2, dadurch gekennzeichnet, daß es im wesentlichen die Form eines Stiftes hat, der in seinem vom Drahtseil abgewandten Endbereich mit mindestens einer Ringnut versehen ist, und daß die Mittel zur Aufnahme von durch Längsspannungen im Drahtseil verursachten Zugkräften vorzugsweise einen in die Ringnut passenden Sprengring umfassen.

7. Anschlußstück nach einem der Ansprüche 1 bis 4, dadurch gekennzeichnet, daß es im wesentlichen die Form eines Stiftes oder einer Hülse hat und in seinem vom Drahtseil abgewandten Endbereich mit mindestens einem Querloch versehen ist, und daß die Mittel zur Aufnahme von durch Längsspannungen im Drahseil verursachten Zugkräften vorzugsweise einen in das Querloch passenden Haltebolzen von größerer Länge als dem Durchmesser des Stiftes bzw. der Hülse umfassen.

8. Anschlußstück nach einem der Ansprüche 1 bis 7, dadurch gekennzeichnet, daß die äußeren Abmaße des Anschlußstückes (3) in Richtung quer zur verlängerten Achse des Drahtseilendes (1) kleiner als das 1,175-fache, vorzugsweise kleiner als das 1,1-fache, des Durchmessers des Drahtseiles (2) sind.

9. Anschlußstück nach einem der Ansprüche 1 bis 7, dadurch gekennzeichnet, daß die äußeren Abmaße des Anschlußstückes (3) in Richtung quer zur verlängerten Achse des Drahtseilendes (1) höchstens 5% größer als der Durchmesser des Drahtseiles (2) sind.

10. Anschlußstück nach einem der Ansprüche 1 bis 9,dadurch gekennzeichnet, daß die inneren Abmaße der zur Aufnahme des zusammengepreßten Drahtseilendes (1) dienenden Ausnehmung (6) in dem Anschlußstück (3) in Richtung quer zur Achse des Drahtseilendes (1) kleiner als das 0,86-fache, vorzugsweise kleiner als das 0,8-fache, des Durchmessers des Drahtseiles (2) sind.

## Claims

1. Connection piece (3), which is mounted on the end of a wire cable (2), for connecting the wire cable end (1) to means for taking up tensile forces caused by longitudinal stresses in the wire cable (2), characterized in that the external dimensions of the connection piece (3) in the direction transverse to the extended axis of the wire cable end (1) are substantially equal to or smaller than the diameter of the wire cable (2) and the wire cable is compressed in its end region before it is connected to the connection piece (3) until the wire cable end (1) fits into a cutout (6), provided for receiving the latter, in the connection piece (3) of a smaller opening clearance than the diameter of the wire cable (2), and in that the external dimensions of the connection piece (3) in the direction of the extended axis of the wire cable end (1) are greater than the length of the compressed wire cable end (1) introduced into the cutout (6).

2. Connection piece according to Claim 1, characterized in that it substantially has the shape of a pin (4) which is provided in its end region (5) facing the wire cable (2) with a cutout (6), formed preferably by drilling, for receiving the compressed wire cable end (1).

3. Connection piece according to Claim 1, characterized in that it substantially has the shape of a sleeve which in its end region facing the wire cable serves to receive the compressed wire cable end and in its end region remote from the wire cable serves to receive an intermediate member which connects the sleeve to the means for taking up tensile forces caused by longitudinal stresses in the wire cable.

4. Connection piece according to one of Claims 1 to 3, characterized in that it is compressed, preferably in the shape of a substantially regular hexagon (10), in its end region (5) facing the wire cable (2) and serving to receive the compressed wire cable end (1) to increase the static friction between the wire cable end (1) and the cutout wall (9) surrounding the latter.

5. Connection piece according to Claim 1 or 2, characterized in that it substantially has the shape of a pin (4) which is provided with a thread (8) in its end region (7) remote from the wire cable, and in that the means for taking up tensile forces caused by longitudinal stresses in the wire cable preferably comprise a nut which fits onto this thread.

6. Connection piece according to Claim 1 or 2, characterized in that it substantially has the shape of a pin which is provided with at least one annular groove in its end region remote from the wire cable, and in that the means for taking up tensile forces caused by longitudinal stresses in the wire cable preferably comprise a spring ring which fits into the annular groove.

7. Connection piece according to one of Claims 1 to 4, characterized in that it substantially has the shape of a pin or a sleeve and is provided with at least one transverse hole in its end region remote from the wire cable, and in that the means for taking up tensile forces caused by longitudinal stresses in the wire cable preferably comprise a holding bar, which fits into the transverse hole, of a greater length than the diameter of the pin or of the sleeve.

8. Connection piece according to one of Claims 1 to 7, characterized in that the external dimensions of the connection piece (3) in the direction transverse to the extended axis of the wire cable end (1) are smaller than 1.175 times, preferably smaller than 1.1 times, the diameter of the wire cable (2).

9. Connection piece according to one of Claims 1 to 7, characterized in that the external dimensions of the connection piece (3) in the direction transverse to the extended axis of the wire cable end (1) are at most 5% larger than the diameter of the wire cable (2).

10. Connection piece according to one of Claims 1 to 9, characterized in that the internal dimensions of the cutout (6) in the connection piece (3), serving to receive the compressed wire cable end (1), in the direction transverse to the axis of the wire cable end (1) are smaller than 0.86 times, preferably smaller than 0.8 times, the diameter of the wire cable (2).

## Revendications

1. Pièce de raccordement (3) fixée à l'extrémité d'un câble métallique (2) pour relier l'extrémité (1) du câble métallique à des moyens pour la réception de forces de traction produites par des efforts longitudinaux dans le câble métallique (2), caractérisée en ce que les dimensions externes de la pièce de raccordement (3) dans la direction transversalement à l'axe prolongé de l'extrémité (1) du câble métallique sont sensiblement égales ou plus petites que le diamètre du câble métallique (2), et que le câble métallique est comprimé dans sa zone d'extrémité avant sa connexion avec la pièce de raccordement (3) jusqu'à ce que l'extrémité (1) du câble métallique s'adapte dans un évidement (6) prévu pour la réception de celle-ci dans la pièce de raccordement (3) d'une largeur d'ouverture plus petite que le diamètre du câble métallique (2), et que les dimensions externes de la pièce de raccordement (3) en direction de l'axe prolongé de l'extrémité (1) du câble métallique sont plus grandes que la longueur de l'extrémité comprimée (1) du câble métallique introduite dans l'évidement (6).

2. Pièce de raccordement selon la revendication 1, caractérisée en ce que celle-ci a sensiblement la forme d'une tige (4) qui est pourvue dans sa zone d'extrémité (5) orientée vers le câble métallique (2) d'un évidement (6) réalisé de préférence par perçage pour la réception de l'extrémité comprimée (1) du câble métallique.

3. Pièce de raccordement selon la revendication 1, caractérisée en ce que celle-ci a sensiblement la forme d'un manchon qui sert, dans sa zone d'extrémité orientée vers le câble métallique, à recevoir l'extrémité comprimée du câble métallique, et dans sa zone d'extrémité éloignée du câble métallique à recevoir un organe intermédiaire qui relie le manchon aux moyens prévus pour la réception des forces de traction provoquées par des efforts longitudinaux dans le câble métallique.

4. Pièce de raccordement selon l'une des revendications 1 à 3, caractérisée en ce que celle-ci est comprimée dans sa zone d'extrémité (5) orientée vers le câble métallique (2), prévue pour la réception de l'extrémité comprimée (1) du câble métallique pour augmenter le frottement par adhérence entre l'extrémité (1) du câble métallique et la paroi d'évidement (9) entourant celle-ci, de préférence sous la forme d'un hexagone sensiblement régulier (10).

5. Pièce de raccordement selon la revendication 1 ou 2, caractérisée en ce que celle-ci a essentiellement la forme d'une tige (4) qui est pourvue dans sa zone d'extrémité (7) éloignée du câble métallique d'un filetage (8), et en ce que les moyens prévus pour recevoir les forces de traction produites par des efforts longitudinaux dans le câble métallique comprennent de préférence un écrou adapté à ce filetage.

6. Pièce de raccordement selon la revendication 1 ou 2, caractérisée en ce que celle-ci a essentiellement la forme d'une tige qui est pourvue dans sa zone d'extrémité éloignée du câble métallique d'au moins une rainure annulaire, et en ce que les moyens prévus pour recevoir les forces de traction produites par des efforts longitudinaux dans le câble métallique comprennent de préférence un jonc adapté dans la rainure annulaire.

7. Pièce de raccordement selon l'une des revendications 1 à 4, caractérisée en ce que celle-ci a essentiellement la forme d'une tige ou d'un manchon et qu'elle est pourvue dans sa zone d'extrémité éloignée du câble métallique d'au moins un trou transversal, et en ce que les moyens prévus pour recevoir les forces de traction provoquées par des efforts longitudinaux dans le câble métallique comprennent de préférence un boulon de retenue adopté au trou transversal d'une longueur plus grande que le diamètre de la tige ou du manchon.

8. Pièce de raccordement selon l'une des revendications 1 à 7, caractérisée en ce que les dimensions externes de la pièce de raccordement (3) en direction transversalement à l'axe prolongé de l'extrémité (1) du câble métallique sont plus petites que 1,175 fois, de préférence plus petite que 1,1 fois, du diamètre du câble métallique (2).

9. Pièce de raccordement selon l'une des revendications 1 à 7, caractérisée en ce que les dimensions externes de la pièce de raccordement (3) dans la direction transversalement à l'axe prolongé de l'extrémité (1) du câble métallique sont au plus 5% plus grandes que le diamètre du câble métallique (2).

10. Pièce de raccordement selon l'une des revendications 1 à 9, caractérisée en ce que les dimensions internes de l'évidement (6) servant à la réception de l'extrémité comprimée (1) du câble métallique dans la pièce de raccordement (3) en direction transversalement à l'axe de l'extrémité (1) du câble métallique sont plus petites que 0,86 fois, de préférence plus petites que 0,8 fois, du diamètre du câble métallique (2).
